# EUROPÄISCHE PATENTANMELDUNG

(11) **EP 0 899 137 A2**
(43) Veröffentlichungstag der Anmeldung: **03.03.1999**
(21) Anmeldenummer: 98115873.6
(22) Anmeldetag: 22.08.1998
(51) Int. Cl.: B60J 3/02

(54) **Sonnenblende für Fahrzeuge**

(30) Priorität: 27.08.1997 DE 19737346
(71) Anmelder: Johnson Controls Interiors GmbH, 42285 Wuppertal (DE)
(72) Erfinder: Welter, Patrick, 57730 La Chambre (FR)

(57) **Zusammenfassung**

Eine Sonnenblende für Fahrzeuge weist einen Sonnenblendenkörper (1) mit einer Aufnahmeöffnung für eine Spiegelbaueinheit auf. Die Spiegelbaueinheit besteht aus einem Spiegelgehäuse (3) mit Spiegel (5) und einem Schiebedeckel (4). Am Schiebedeckel (4) befinden sich Zapfen (23, 24), die in Kulissennuten (21, 22) gleiten. Die Kulissennuten (21) weisen einendig einen Etagenbogen (35) auf und die Kulissennuten (22) gehen einendig in eine herzförmige Steuerkurve (25) mit einer Verriegelungseinrichtung für die Zapfen (24) über. Der Schiebedeckel (4) ist über eine Feder (6) nach dem Lösen der Verriegelungseinrichtung automatisch zu öffnen.

## Beschreibung

Die Erfindung bezieht sich auf eine Sonnenblende für Fahrzeuge der im Obergriff des Anspruchs 1 angegebenen Art.

Sonnenblenden dieser Art sind durch die DE 34 27 952 A1 oder DE 43 40 685 A1 bekanntgeworden.

Aufgabe der vorliegenden Erfindung ist es, den Abnehmern eine weitere Sonnenblende zur Verfügung zu stellen, deren Schiebedeckel besonders leicht und problemlos zu betätigen ist bei einem vergleichsweise einfachen und kostengünstigen Aufbau.

Die erfindungsgemäße Lösung dieser Aufgabe ist im Anspruch 1 angegeben, wahrend in den Unteransprüchen vorteilhafte Weiterbildungen und Ausgestaltungen der Erfindung gekennzeichnet sind.

Ein Ausführungsbeispiel der Erfindung wird im folgenden anhand der Zeichnungen näher erläuter, und es zeigen:
- Fig. 1: eine Ansicht der Sonnenblende mit geschlossenem Schiebedeckel,
- Fig. 2: die Sonnenblende nach Fig. 1 mit geöffnetem Schiebedeckel,

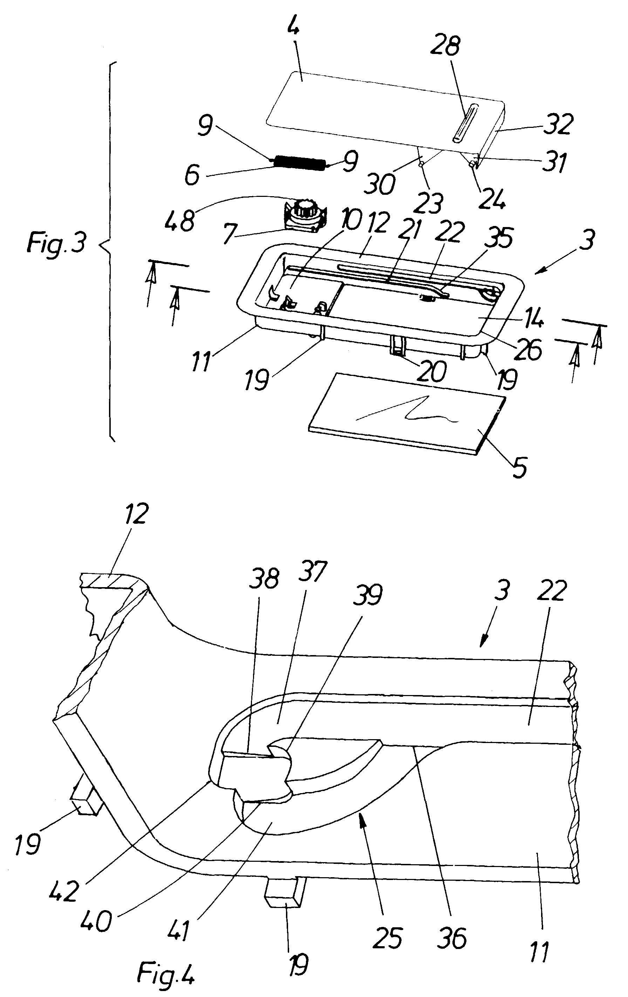

- Fig. 3: eine schaubildliche Explosivdarstellung der Spiegelbaueinheit,
- Fig. 4: eine Einzelheit der Erfindung,

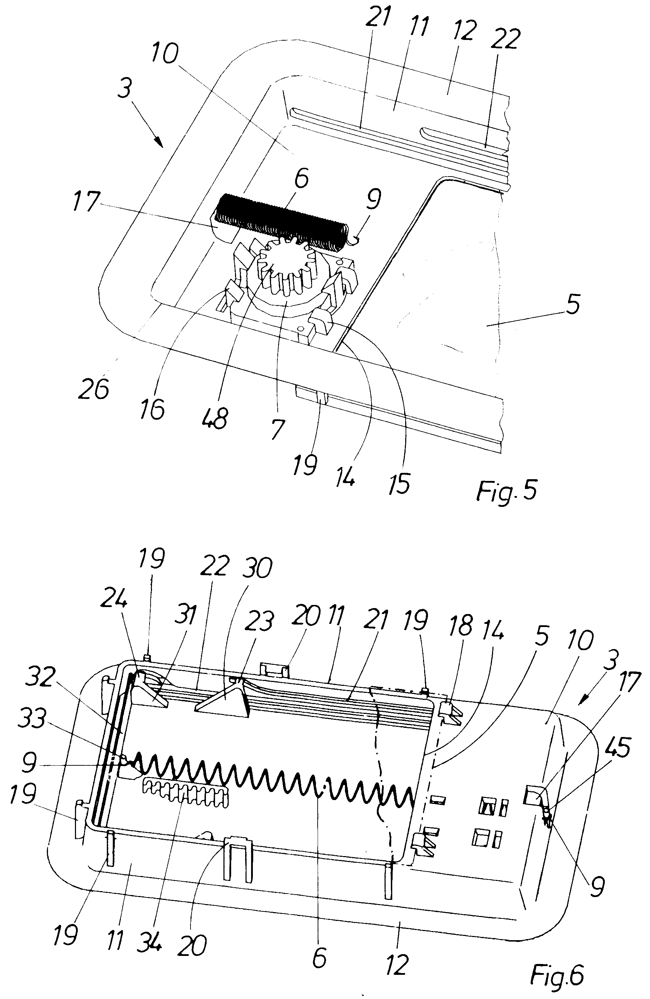

- Fig. 5: eine Teilansicht der Spiegelbaueinheit nach Fig. 3,
- Fig. 6: die Spiegelbaueinheit von unten gesehen,
- Fig. 7: einen Schnitt etwa folgend der Linie B - B in Fig. 3 und
- Fig. 8: einen Schnitt etwa folgend der Linie A - A in Fig. 3.

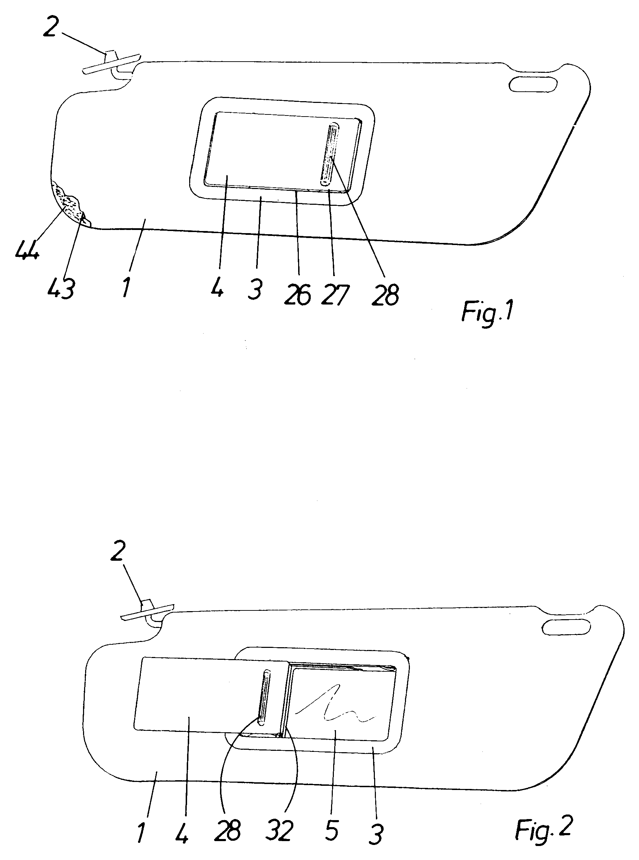

Fig. 1 und 2 zeigen einen Sonnenblendenkörper 1, der aus Schaumkunststoff 44 oder dgl. Polstermaterial gebildet und mittels herkömmlichem Umhüllungsmaterial 43, wie PVC- oder TPO-Folie oder kaschiertem Textilmaterial umhüllt ist. Der Sonnenblendenkörper 1 ist mit einem, eine Achse und ein Lagerböckchen umfassenden Lagerelement 2 an einer Fahrzeugkarosserie befestigbar.

Der Sonnenblendenkörper 1 weist an einer Breitseite eine Aufnahmeöffnung mit einer darin eingesetzten Spiegelbaueinheit auf. Die Spiegelbaueinheit besteht aus einem wannenförmigen Spiegelgehäuse 3, einem federbelasteten Schiebedeckel 4 und aus einem Spiegel 5. Das Spiegelgehäuse 3 ist wie auch der Schiebedeckel 4 als Kunststoff-Spritzgußteil ausgebildet und besteht aus einem wärme- und kältestabilen Kunststoff. Zur Spiegelbaueinheit gehört ferner eine Schraubenfeder 6 und eine Fettbremse 7. Die Schraubenfeder 6 weist endseitige Hakenösen 9 auf.

Das Spiegelgehäuse 3 weist einen Gehäuseboden 10 mit einer Bodenöffnung 14, eine sich etwa rechtwinklig an den Gehäuseboden 14 anschließende umlaufende Wandung 11 und einen sich daran etwa rechtwinklig anschließenden, umlaufenden Flansch 12 auf, der nach außen absteht. Der Gehäuseboden 10 trägt daran angespritzte feste Haken 15 und federnde Haken 16 zur Festlegung der mit einem Ritzel 48 versehenen Fettbremse 7. In einem Freibereich 17 der Wandung 11 ist eine Zapfenanbindung 45 für eine der Hakenösen 9 der Schraubenfeder 6 vorgesehen. Am Gehäuseboden 10 sind starre Winkelhaken 10, die den Spiegel 5 hintergreifen, angeformt, während an der Gehäusewandung 11 Stege 19 angeformt sind, die den Spiegel 5 positionieren. Ferner sind an der Gehäusewandung 11 federnde Haken 20 angeformt, die den Spiegel 5, der sich unter dem Gehäuseboden 10 im Bereich der Gehäuseöffnung 14 befindet, hintergreifen und klapperfrei halten.

An den Längsseiten der Wandung 11 erstrecken sich innenseitig einander gegenüberliegend und deckungsgleich Kulissennuten 21 und 22, die zueinander einen Höhen- und Längenversatz in Abstimmung mit am Schiebedeckel 4 angeformten Zapfen 23 und 24 aufweisen. Während die unteren beiden gegenüberliegenden Kulissennuten 21 in einem Etagenbogen 35 enden, gehen die Kulissennuten 22 jeweils einendig in eine herzförmige Steuerkurve 25 über.

Der Schiebedeckel 4 ist in seinen Abmessungen auf die obere Öffnungsweite 26 des Spiegelgehäuses 3 abgestimmt mit einem geringen umlaufenden Luftspalt 27. Der Schiebedeckel 4 weist eine Betätigungshandhabe 28 auf, die als Griffleiste oder auch Griffnut ausgebildet sein kann. Unterseitig sind am Schiebedeckel 4 den Längsrändern benachbart gegenüberliegende dreieckförmige Materialansatze 30, 31 mit seitlich überstehend angeordneten Zapfen 23, 24 angeformt. Die Zapfen 23, 24 sind dazu bestimmt in den Kulissennuten 21, 22 zu gleiten. Zur Abschottung weist der Schiebedeckel 4 eine Sichtblende 32 auf. Der Schiebedeckel 4 weist weiterhin unterseitig einen zur Zapfenanbindung 45 fluchtenden Zapfen 33 auf, an dem die zweite Hakenöse 9 der Schraubenfeder 6 eingehangen wird. Eine noch an der Unterseite des Schiebedeckels 4 angeformte Zahnstange 34 ist dazu bestimmt, mit dem Ritzel 48 der Fettbremse 7 zu kämmen, damit die Öffnungsbewegung des Schiebedeckels 4 nicht schlagartig erfolgt.

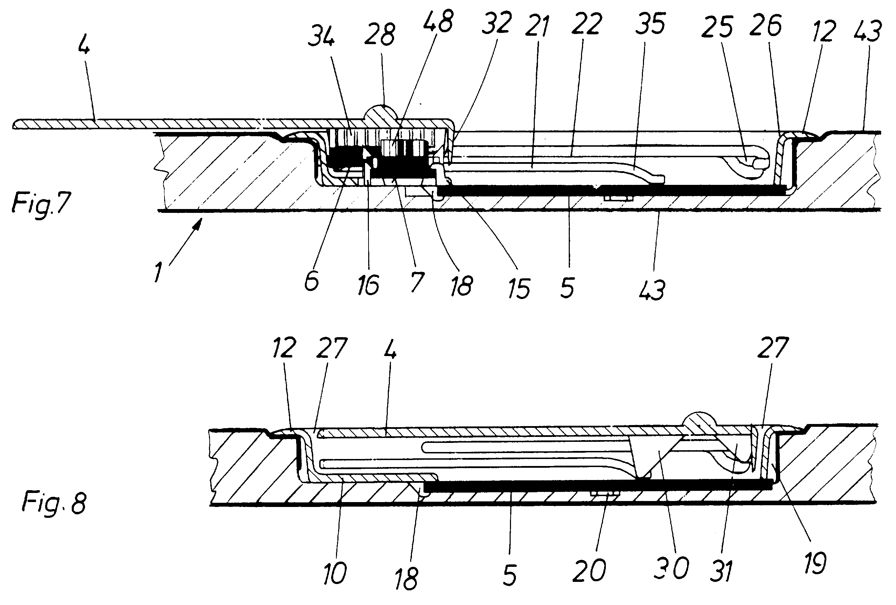

Der Schiebedeckel 4 wird in Offenstellung nach Fig. 7 mit seinen Zapfen 23, 24 von oben her in die Kulissennuten 21, 22 eingedrückt, wobei die Materialansätze 30, 31 federnd zurückweichen. Die oberen Kulissennuten 22 haben einendig die erwähnten herzförmigen Steuerkurven 25 mit einem oberen Pfad 37 und einem unteren Pfad 41 sowie mit einer als Rastposition dienenden Ausrundung 39. Die Zapfen 24 werden von den Kulissennuten 22 bedingt durch einen leichten Materialversatz 36 bei der Schließbewegung des Schiebedeckels 4 in den jeweils oberen Pfad 37 der Steuerkurven 25 geführt. An jedem Pfad 37 ist eine Materialabstufung 38 ausgebildet. Durch Fortbewegung des Schiebedeckels 4 rutschen die Zapfen 24 über diese Abstufung 38 bis zur Schikane 42. Die Schikane 42 verhindert den direkten Übergang in die unteren Pfade 41. Nach dem Loslassen des Schiebedeckels 4 werden die zapfen 24 durch die gespannte Druckfeder 6 in die innere Ausrundung 39 der Steuerkurven 25 gezogen. Der Schiebedeckel 4 ist jetzt in der den Spiegel 5 abdeckenden geschlossenen Stellung fixiert. Durch Druckausüben auf die Betätigungshandhabe 28 überwinden die Zapfen 24 Abstufungen 40 unterhalb der Ausrundung 39 und fallen in den unteren Pfad 41 der Steuerkurve 25 ein. Durch die beim Schließen des Schiebedeckels 4 vorgespannte Feder 6 wird nun der Schiebedeckel 4 in die Offenstellung überführt, wobei sich die Zapfen 23 und 24 längs der Kulissennuten 21 und 22 bewegen.

Aufgrund der festgelegten Ablaufgeometrie, d. h. Ausbildung und Anordnung der Kulissennuten 21, 22 sowie der Anordnung und Position der Zapfen 23, 24 wird der Schiebedeckel 4 von der geschlossenen Stellung nach Fig. 1 in die offene Stellung nach Fig. 2 durch die S-förmige Ausbildung bzw. Etagenbogen 35 und der Anordnung der herzförmigen Steuerkurve 25 angehoben und schiebt sich über den Flansch 12 und der Oberfläche des Sonnenblendenkörpers 1. Der Schiebedeckel 4 vollführt zunächst eine Kippbewegung um die Zapfen 23 und richtet sich danach parallel zur Breitseite des Sonnenblendenkörpers 1 aus. Beim Schließen des Schiebedeckels 4 erfolgt zunächst eine parallele Verschiebung zum Sonnenblendenkörper. Erst im letzten Drittel des Bewegungshubs senkt sich der Schiebedeckel durch die Etagenbogen 35 und Steuerkurven 25 ab und verharrt in der Endlage bündig mit dem Flansch 12 und der entsprechenden Breitseite des Sonnenblendenkörpers 1, der den Flansch in einer stufenförmigen Absetzung versenkt aufnimmt. Wesentlich für den geschilderten Bewegungsablauf ist die Anordnung der Zapfen 23 und 24 an einem Endbereich des Schiebedeckels 4 und das Zusammenspiel der Zapfen 23 mit der Kulissennut 21 nebst Etagenbogen 35 sowie der Zapfen 24 mit der Kulissennut 22 nebst herzförmiger Steuerkurve 25. Wesentlich ist auch, daß der Sonnenblendenkörper 1 komplett hergestellt und mit Umhüllungsmaterial 43 versehen sein kann, bevor die Spiegelbaueinheit in die Aufnahmeöffnung im Sonnenblendenkörper 1 eingesetzt und verankert wird.

## Patentansprüche

1. Sonnenblende für Fahrzeuge mit einem Sonnenblendenkörper (1), der an einer Breitseite eine Aufnahmeöffnung mit einer darin eingesetzten Spiegelbaueinheit aufweist, die ein Spiegelgehäuse (3) mit Spiegel (5) und einen im Spiegelgehäuse (3) in Führungen gelagerten federbelasteten Schiebedeckel (4) umfaßt, der nach dem Lösen einer Verriegelungseinrichtung aus einer den Spiegel (5) abdeckenden Lage in eine den Spiegel (5) freigebende Lage bewegbar ist, dadurch gekennzeichnet, daß die seitlichen Führungen im Spiegelgehäuse (3) aus ersten, einendig in herzförmige Steuerkurven (25) übergehende Kulissennuten (22) und aus zweiten, dazu parallel verlaufenden, an ihren den Steuerkurven (25) benachbarten Endbereichen in Etagenbogen (35) übergehende Kulissennuten (21) bestehen, daß der Schiebedeckel (4), der an einem Endbereich eine oberseitig angeordnete Handhabe (28) aufweist, an diesem Endbereich an nach unten weggerichteten Materialansätzen (30, 31) seitlich überstehend angeordnete Zapfen (23, 24) trägt, die zum einen in die Steuerkurven (25) und zum anderen in die Etagenbogen (35) eingreifen, wenn der Schiebedeckel (4) seine den Spiegel (5) abdeckende Lage einnimmt und daß der Schiebedeckel (4) mittels der Feder (6) in die den Spiegel (5) freigebende Lage bewegbar ist, sobald durch eine Druckbetätigung auf die Handhabe (28) die Verriegelungsvorrichtung gelöst wird, wobei der Schiebedeckel (4) um die im Etagenbogen (35) eingreifenden Zapfen (23) kippt und mit seinem freien, der Handhabe (28) abgewandten Endbereich aus dem Spiegelgehäuse (3) herausschwenkt.

2. Sonnenblende nach Anspruch 1, dadurch gekennzeichnet, daß das Spiegelgehäuse (3) und der Schiebedeckel (4) Kunststoff-Spritzgußteile sind.

3. Sonnenblende nach Anspruch 1 oder 2, dadurch gekennzeichnet, daß das Spiegelgehäuse (3) einen Gehäuseboden (10) mit einer den Blick auf den am Gehäuseboden (10) angeordneten Spiegel (5) freigebenden Bodenöffnung (14) aufweist.

4. Sonnenblende nach wenigstens einem der Ansprüche 1 bis 3, dadurch gekennzeichnet, daß auf dem Gehäuseboden (10) eine Bremse (7) mit Ritzel (48) angeordnet ist, welches mit einer an der Unterseite des Schiebedeckels (4) angeformten Zahnstange (34) kämmt.

5. Sonnenblende nach einem oder mehreren der Ansprüche 1 bis 4, dadurch gekennzeichnet, daß das Spiegelgehäuse (3) wannenförmig ist und einen Gehäuseboden (10), eine sich daran etwa rechtwinklig anschließende umlaufende Wandung (11) und einen sich daran etwa rechtwinklig anschließenden, umlaufenden Flansch (12) aufweist, der nach außen absteht, in eine die Aufnahmeöffnung im Sonnenblendenkörper (1) umrahmende stufenförmige Absetzung eingreift und flachenbündig mit der entsprechenden Breitseite des Sonnenblendenkörpers (1) abschließt.

6. Sonnenblende nach wenigstens einem der Ansprüche 1 bis 5, dadurch gekennzeichnet, daß der Schiebedeckel 4 in seiner den Spiegel (5) abdeckenden Lage flächenbündig mit der Oberfläche des Flanschs (12) des Spiegelgehäuses (3) abschließt.

7. Sonnenblende nach wenigstens einem der Ansprüche 1 bis 6, dadurch gekennzeichnet, daß das Spiegelgehäuse (3) angeformte Stege, Haken und Klipse zur Befestigungsanordnung des Spiegels (5), der Bremse (7) und der Zugfeder (6) aufweist.
